# EUROPEAN PATENT APPLICATION

(11) **EP 4 614 235 A1**
(43) Date of publication of application: **10.09.2025**
(21) Application number: 25161750.2
(22) Date of filing: 05.03.2025
(51) Int. Cl.: G03G 7/00, G03G 15/16

(54) **ELECTROPHOTOGRAPHIC MEMBER AND ELECTROPHOTOGRAPHIC IMAGE FORMING APPARATUS**

(30) Priority: 06.03.2024 JP 2024034121
(71) Applicant: CANON KABUSHIKI KAISHA, Tokyo 146-8501 (JP)
(72) Inventor: INOUE, Shota, Tokyo, 146-8501 (JP); MORI, Haruki, Tokyo, 146-8501 (JP); HORI, Atsushi, Tokyo, 146-8501 (JP)
(74) Representative: TBK

(57) **Abstract**

An electrophotographic member comprising: a base layer; an elastic layer on the base layer; and a surface layer on the elastic layer, wherein the surface layer comprises a silicone graft urethane resin, an elastic deformation power ηIT calculated from a load displacement curve, obtained with a nanoindentation test according to ISO 14577 by bringing a Vickers indenter into contact with an outer surface of the surface layer and setting a test load at 260 µN, is 30 to 90%, and a Martens hardness determined by the nanoindentation test at the outer surface of the surface layer is 12 to 200 N/mm².

## Description

### BACKGROUND OF THE INVENTION

### Field of the Invention

The present disclosure relates to an electrophotographic member for use in an electrophotographic image forming apparatus such as a copier or a printer, and relates to an electrophotographic image forming apparatus.

### Description of the Related Art

In an image forming apparatus based on an electrophotographic system (which will be hereinafter also referred to as an "image forming apparatus"), a tandem system has been widely adopted in which toner images of respective colors of yellow (Y), magenta (M), cyan (C), and black (K) are superimposed on an intermediate transfer belt, and then, are transferred collectively onto paper, thereby obtaining a full-color image.

In such an image forming apparatus, in order to further enhance the image quality, an intermediate transfer belt (which will be hereinafter referred to as an elastic intermediate transfer belt) having an elastic layer for at least one layer of a layer configuration may be adopted in place of an intermediate transfer belt using a resin. The elastic intermediate transfer belt has a flexible elastic layer. For this reason, the pressure to act on the toner at the transfer part can be reduced, which is effective for preventing the "so-called void phenomenon". Further, the elastic intermediate transfer belt is excellent in adhesiveness to paper at the secondary transfer part. Accordingly, the elastic intermediate transfer belt is effective not only for the improvement of the transfer efficiency relative to general paper, but also for the transferability relative to heavy paper or the transferability relative to paper having unevenness.

As the material for forming the surface of the elastic intermediate transfer belt, a material with a higher hardness than that of the elastic layer enough to prevent abrasion or releasing due to rubbing with various contact members is preferably used. However, when a material with a too high hardness is used, the medium followability, which is the advantage of the elastic belt, may be impaired. For this reason, a material with a higher flexibility is used within a range that prevents abrasion or releasing. Further, in addition to reduce the frictional force for improving the abrasion resistance, in order to improve the toner releasability, the reduction of the surface free energy has been similarly also demanded.

For example, Japanese Patent Application Publication No. 2020-086171 discloses that a silicone graft urethane resin for imparting a high flexibility and a low friction is used as the surface layer material of a development roller.

### SUMMARY OF THE INVENTION

In a case where an urethane resin with a low hardness is used as the surface layer of the elastic intermediate transfer belt, although the medium followability is excellent, the separability from various contact members and the releasability of a toner that has followed the medium are undesirably inferior.

Further, when an urethan resin excellent in flexibility is used as the surface layer of the elastic intermediate transfer belt, the frictional force is high, raising an issue in terms of the abrasion resistance. Still further, in a case where the material as described in Japanese Patent Application Publication No. 2020-086171 is used as the surface layer of the elastic intermediate transfer belt, undesirably, the toner releasability is low, and the density uniformity of an image is inferior.

Therefore, the present disclosure is intended for an electrophotographic member that reduces the frictional force of the surface, and improves the toner releasability while keeping the medium followability, and is excellent in density uniformity of an image. Furthermore, the present disclosure is intended for an electrophotographic image forming apparatus including the electrophotographic member as an intermediate transfer belt.

The present disclosure in its first aspect provides an electrophotographic member as specified in claims 1 to 8.

The present disclosure in its second aspect provides an electrophotographic image forming apparatus as specified in claims 9 to 10.

The present disclosure can provide an electrophotographic member that reduces the frictional force of the surface, and improves the toner releasability while keeping the medium followability, and is excellent in density uniformity of an image. Furthermore, the present disclosure can provide an electrophotographic image forming apparatus including the electrophotographic member as an intermediate transfer belt.

Further features of the present invention will become apparent from the following description of exemplary embodiments with reference to the attached drawings.

### BRIEF DESCRIPTION OF THE DRAWINGS

FIG. 1 is a cross sectional view showing one example of an image forming apparatus using an elastic intermediate transfer belt; and
FIG. 2 is a cross sectional view showing a layer configuration of an elastic intermediate transfer belt.

### DESCRIPTION OF THE EMBODIMENTS

In the present disclosure, "from XX to YY" or "XX to YY" indicative of the numerical value range means the numerical value range including the lower limit and the upper limit that are endpoints unless otherwise specified. When the numerical value ranges are described in steps, the upper limits and the lower limits of respective numerical value ranges can be arbitrarily combined. Further, in the present disclosure, for example, the description such as "at least one selected from the group consisting of XX, YY, and ZZ" means any of XX, YY, ZZ, the combination of XX and YY, the combination of XX and ZZ, the combination of YY and ZZ, or the combination of XX, YY, and ZZ.

Below, embodiments of the present disclosure will be described. Incidentally, the present disclosure is not limited to the following description.

The present disclosure relates to an electrophotographic member having a base layer; an elastic layer on the base layer; and a surface layer on the elastic layer, in which
the surface layer includes a silicone graft urethane resin,
an elastic deformation power ηIT calculated from a load displacement curve, obtained with a nanoindentation test according to ISO 14577 by bringing a Vickers indenter into contact with an outer surface of the surface layer and setting a test load at 260 µN, is 30 to 90%, and
a Martens hardness determined by the nanoindentation test at the outer surface of the surface layer is 12 to 200 N/mm².

The present inventors presumes the reason why the presence of the features causes the effects of the present disclosure to be exhibited as follows.

When the medium followability is low, or when the toner releasability is low, the toner is not sufficiently transferred to the medium, thereby impairing the density uniformity. The toner releasability is considered to be reduced when the surface free energy of the outer surface of the surface layer is high, and the intermolecular force between the surface layer and the toner is high, or when the Martens hardness or the elastic deformation power of the outer surface of the surface layer is low, and the contact area with the toner is large. When the material for the surface layer is only a urethane resin, the flexibility is excellent. For this reason, the medium followability is good. However, the surface free energy is high. For this reason, the toner releasability is reduced, so that the density uniformity is impaired.

Further, even in the case where the surface free energy is low, when the Martens hardness or the elastic deformation power ηIT of the surface layer is low, the contact area between the surface layer and the toner increases. As a result, the toner releasability is reduced, so that the density uniformity is impaired. For this reason, it is considered as follows: in order to improve the density uniformity, it is necessary to reduce the surface free energy, and to enhance the Martens hardness or the elastic deformation power of the surface layer without impairing the medium followability, for improving the toner releasability.

For the electrophotographic member of the present disclosure, the surface layer includes a silicone graft urethane resin. The silicone graft urethane resin has, for example, a structure in which a silicone structure is grafted to a urethane resin. The main chain is a urethane resin, and hence the flexibility is excellent. For this reason, the medium followability is improved. Further, conceivably, the silicone structure is bonded to the urethane resin of the main chain, and extends to the side chain, thereby to assume a graft shape. In consequence, the surface free energy is reduced, so that the toner releasability is improved. As a result of this, the density uniformity is improved. Further, the silicone structure extends to the side chain, also resulting in the reduction of the frictional force.

The elastic deformation power ηIT calculated from the load displacement curve obtained with the nanoindentation test according to ISO 14577 by bringing a Vickers indenter into contact with the outer surface of the surface layer, and setting the test load at 260 µN is 30 to 90%. In the nanoindentation test, the test load is set at 260 µN, and the load can correspond to the load when a toner is forced into the intermediate transfer belt in an electrophotographic image forming apparatus. With the nanoindentation measurement, the elastic deformation power being constant, or larger indicates that the elasticity tends to be kept, and recovering to the original shape tends to be caused for unloading. The elastic deformation power ηIT falling within the foregoing range causes the deformed surface layer to be recovered to the original state without permanent deformation. This reduces the contact area between the toner and the surface layer. This conceivably results in the improvement of the toner releasability, so that the density uniformity becomes good.

The elastic deformation power ηIT is preferably 40 to 85%.

Further, the Martens hardness determined by the nanoindentation test at the outer surface of the surface layer is 12 to 200 N/mm². The Martens hardness indicates the deformation amount when a load is applied. In other words, a higher Martens hardness results in a smaller deformation amount when a load is applied. For this reason, the Martens hardness falling within the foregoing range reduces the contact area between the toner and the surface layer. This conceivably improves the toner releasability, so that the density uniformity becomes good.

The Martens hardness is preferably 15 to 175 N/mm².

In order to control the elastic deformation power ηIT within the foregoing range, for example, it is essential only that the number average molecular weight of polyol is increased. The elastic deformation power ηIT can be increased by using polyol with a large number average molecular weight. Further, the elastic deformation power ηIT can be reduced by using polyol with a small number average molecular weight.

In order to control the Martens hardness within the foregoing range, for example, it is essential only that the number average molecular weight of polyol is increased, or the kind of isocyanate is changed. The Martens hardness can be increased by using polyol with a small number average molecular weight, or using a biuret type or nurate type isocyanate. Further, the Martens hardness can be reduced by using polyol with a large number average molecular weight, or using an adduct type isocyanate.

As with the mechanism described up to this point, conceivably, a silicone graft urethane resin is adopted, and both of the elastic deformation power ηIT and the Martens hardness are satisfied, so that effects are synergistically exerted on each other, which enables the achievement of the effects of reduction of the frictional force, the medium followability, and the density uniformity of an image.

Further, the silicon element amount of the outer surface of the surface layer detected with the XPS method (X-ray photoelectron spectroscopy) is preferably 10 to 25 atomic% (atom number%), and more preferably 10 to 21 atomic% on the basis of the total amount of Si, N, C, and O. The silicon element amount falling within the foregoing range results in the proper arrangement of the silicone structure at the outer surface of the surface layer. For this reason, the friction is reduced, and the abrasion resistance is more improved.

Further, the silicone graft urethane resin preferably has the structure represented by the following formula (1) , and has at least one selected from the group consisting of the structure represented by the following formula (2-1), the structure represented by the formula (2-2), and the structure represented by the formula (2-3) in the molecule.

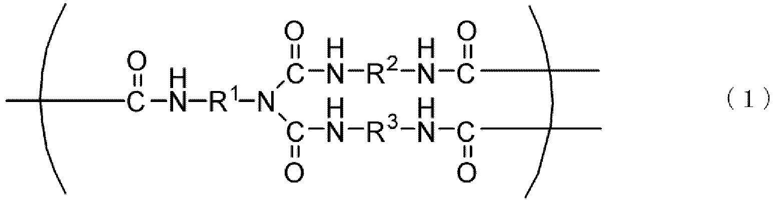

In the formula (1), R¹ to R³ each independently represent a straight chain or branched alkylene group having 1 to 12 carbon atoms (preferably 3 to 8 carbon atoms).

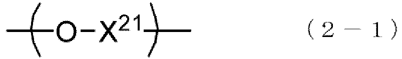

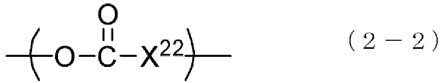

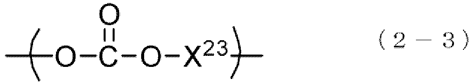

In the formulae (2-1) to (2-3), X²¹ to X²³ each independently represent a straight chain or branched alkylene group having 1 to 12 carbon atoms (preferably 2 to 8 carbon atoms). The structures can be confirmed by analyzing the surface layer by the pyrolysis gas chromatograph mass spectrometry method (pyrolysis GC-MS).

The silicone graft urethane resin has the structure represented by the formula (1). As a result, the Martens hardness of the surface layer increases, and the toner releasability is more improved. Incidentally, the structure represented by the formula (1) can be introduced into a silicone graft urethane resin by using, for example, biuret type polyisocyanate for the material for the urethane resin.

Further, the silicone graft urethane resin has at least any of the structures represented by the formulae (2-1) to (2-3), and accordingly, is excellent in flexibility, and is more improved in medium followability. This conceivably more improves the density uniformity. Incidentally, the structure represented by the formula (2-1) can be introduced into the silicone graft urethane resin by using, for example, polyether polyol for the material for the urethane resin. The structure represented by the formula (2-2) can be introduced into the silicone graft urethane resin by using, for example, polyester polyol for the material for the urethane resin. The structure represented by the formula (2-3) can be introduced into the silicone graft urethane resin by using, for example, polycarbonate polyol for the material for the urethane resin.

The silicone graft urethane resin includes at least one selected from the group consisting of the structure represented by the formula (2-1), the structure represented by the formulae (2-2), and the structure represented the formula (2-3) in an amount of preferably 5.0 to 65.0 mass%, and more preferably in an amount of 25.0 to 45.0 mass%.

The silicone graft urethane resin includes the structure represented by the formula (1) in an amount of preferably 35.0 to 95.0 mass%, and more preferably in an amount of 55.0 to 75.0 mass%.

The silicone graft urethane resin preferably has the structure represented by the formula (3) in the molecule. The structure represented by the formula (3) corresponds to the structure represented by the formula (2-1).

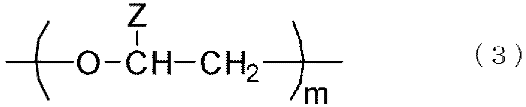

**In** the formula (3), Z represents any of a hydrogen atom or a methyl group, and m represents an integer of 3 to 30, and preferably 3 to 9.

The formula (3) includes an ether bond in the molecule, and is excellent in flexibility. For this reason, the medium followability can be more improved.

Particularly, in the formula (3), more preferably, Z is a hydrogen atom, and m is an integer of 5 to 7. The m falling within this range conceivably improves the toner releasability, which results in a better density uniformity. The structure represented by the formula (3) can be introduced into the silicone graft urethane resin by using, for example, polyethylene glycol, or polypropylene glycol for the material for the urethane resin. Polyethylene glycol is preferable.

The silicone graft urethane resin preferably has the structure represented by the formula (4), the structure represented by the formula (5), and the structure represented by the formula (6) in the molecule.

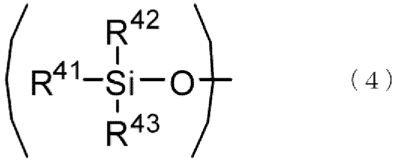

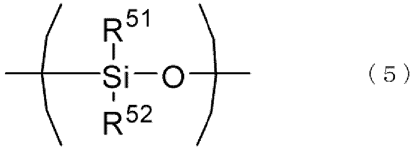

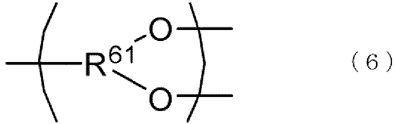

In the formula (4), R⁴¹ to R⁴³ each independently represent a straight chain or branched alkyl group having 1 to 6 carbon atoms (preferably 1 to 4 carbon atoms). The structure represented by the formula (4) can be introduced into the silicone graft urethane resin by using, for example, a single terminal modified silicone oil for the material for the urethane resin.

In the formula (5), R⁵¹ and R⁵² each independently represent a straight chain or branched alkyl group having 1 to 6 carbon atoms (preferably 1 to 3 carbon atoms, and more preferably 1 carbon atom). The structure represented by the formula (5) can be introduced into the silicone graft urethane resin by using, for example, a silicone oil for the material for the urethane resin.

In the formula (6), R⁶¹ represents a trivalent hydrocarbon group having 1 to 12 carbon atoms (preferably 3 to 9 carbon atoms). The structure represented by the formula (6) can be introduced into the silicone graft urethane resin by using, for example, a single terminal diol modified silicone oil for the material for the urethane resin.

The silicone graft urethane resin more preferably has a single terminal diol modified silicone oil-grafted structure.

The structures can be confirmed by analyzing the surface layer with the pyrolysis gas chromatograph mass spectrometry method (pyrolysis GC-MS).

The silicone graft urethane resin has the structures of the formulae (4) to (6). As a result, conceivably, the abrasion resistance and the toner releasability are improved, and the density uniformity becomes better.

The total content ratio of the structure represented by the formula (4), the structure represented by the formula (5), and the structure represented by the formula (6) in the silicone graft urethane resin is preferably 0.02 to 0.35 mass%, and more preferably 0.10 to 0.25 mass%.

A1 represents the hexadecane contact angle of the outer surface of the surface layer, and A2 represents the hexadecane contact angle after wiping the outer surface of the surface layer with a Bemcot paper impregnated with hexane while applying a force of 5 N 50 times. At this step, A2/A1 is preferably 0.90 to 1.20, and more preferably 0.95 to 1.05.

Wiping with Bemcot paper impregnated with hexane removes the oil seeping to the surface, so that the covered graft structure appears, and the contact angle increases when the surface layer is covered with an unreacted terminal modified silicone oil. On the other hand, when the addition amount of the terminal modified silicone oil is small, friction upon wiping impairs the graft structure, resulting in the reduction of the contact angle. Therefore, the A2/A1 falling within the foregoing range can stabilize the toner releasability without impairing the graft shape at the time of image formation.

The A2/A1 can be increased by increasing the addition amount of the terminal modified silicone oil on the basis of the amount of polyol. Further, the A2/A1 can be reduced by reducing the addition amount of the terminal silicone oil on the basis of the amount of polyol.

Then, the configuration of the electrophotographic member will be described. Further, each configuration of the electrophotographic member will be described. In addition, the manufacturing method thereof will be also described. Incidentally, the present disclosure is not limited to the following description.

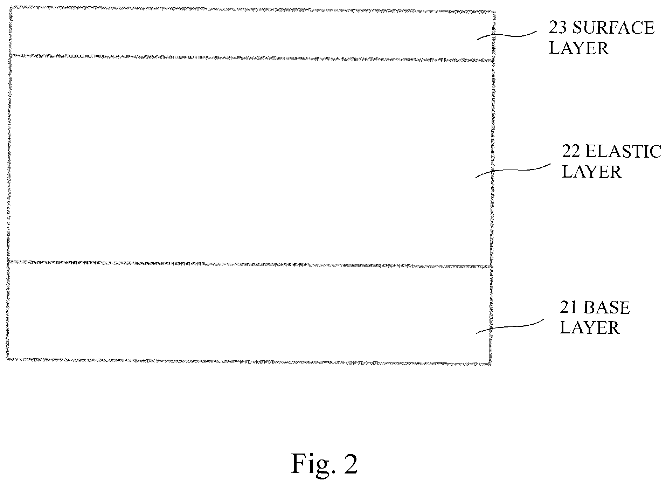

The electrophotographic member is a laminated body including at least 3 layers of a base layer 21, an elastic layer 22, and a surface layer 23 shown in FIG. 2. However, the present disclosure is not limited to the 3 layers, and a primer layer for improving the adhesiveness, or an intermediate layer for suppressing the bleed product from the elastic layer 22 may be added between respective layers. The electrophotographic member may have an endless belt shape. For example, the surface layer configures the outer surface of the electrophotographic member. The electrophotographic member is preferably an intermediate transfer member.

### Base layer

The base layer (base material) 21 will be described. The base layer 21 is, for example, of a seamless type cylindrical model in a roll shape or a belt shape. Examples of the material suitable for the base layer 21 may include resin materials such as polyether ether ketone, polyethylene terephthalate, polybutylene naphthalate, polyester, polyimide, polyamide, polyamideimide, polyacetal, polyphenylene sulfide, and polyvinylidene fluoride. The base layer preferably includes polyimide.

Incidentally, the resin for the base layer 21 may be added with a conductive compound such as a metal powder, a conductive oxide powder, conductive carbon, a lithium salt, or an ion liquid, to be imparted with the electric conductivity. From the viewpoints of the productivity and the electric conductivity, for example, for the base layer 21, polyvinylidene fluoride added with polyalkylene glycol and a lithium salt may be used. A combination of other resins and conductive agents shown may be used.

The thickness of the base layer 21 is preferably 10 to 500 µm, and more preferably 50 to 200 µm. A thickness of 10 µm or more is preferable from the viewpoint of the mechanical strength. A thickness of 500 µm or less can provide preferable rigidity.

### Elastic Layer

The elastic layer 22 will be described. The elastic layer 22 follows the surface profile of the recording medium, and hence is required to have an appropriate flexibility. As such materials having the flexibility, mention may be made of rubber materials and elastomer materials such as silicone rubber, urethane rubber, chloroprene rubber, acrylic rubber, olefin elastomer, styrene elastomer, polyamide elastomer, polyester elastomer, and urethane resin elastomer.

The elastic layer 22 preferably includes silicone rubber. The elastic layer 22 may be a cured product of an addition curable liquid silicone rubber mixture. Silicone rubber can be controlled on the hardness of the elastic layer according to the crosslinking density. In order to impart higher flexibility, the hardness can be lowered by reducing the crosslinking density. Further, silicone rubber is the material having the highest shape stability of the materials shown, and can keep the stable shape even during transport or in a pressurized state for a long time. The elastic layer 22 includes silicone rubber, so that favorable medium followability can be attained, resulting in the improvement of the image density uniformity.

Incidentally, the elastic layer 22 may be added with a conductive compound such as a metal powder, a conductive oxide powder, conductive carbon, a lithium salt, or an ion liquid, thereby to be imparted with the electric conductivity. For example, a conductive agent may be added to an addition curable liquid silicone rubber mixture. For example, silicone rubber having a small compression set (JISK 6262) also in the low hardness region is preferable. In addition to silicone rubber \, other resins and conductive agents shown may be used.

The thickness of the elastic layer 22 is preferably 100 µm to 1000 µm, more preferably 200 µm to 450 µm, and further preferably 200 µm to 300 µm.

Further, the hardness of the elastic layer 22 measured using a micro rubber hardness tester (MD-1 type C, manufactured by KOBUNSHI KEIKI CO., LTD., temperature 23°C, relative humidity 40%) is preferably 85° or less.

The conductive compound addition prescription relative to the elastic layer 22 is preferably 10 parts by weight or less for every 100 parts by weight of silicone rubber from the viewpoint of the mechanical strength. This imparts the elastic layer 22 with the stable conductivity suitable for the intermediate transfer belt.

Further, the elastic layer 22 may additionally include additives such as a filler, a crosslinking agent (a crosslinking promoter, a crosslinking retardant, or a crosslinking auxiliary), a scorch retarder, an antioxidant, a softener, a heat stabilizer, a flame retardant, a flame retardant auxiliary, an ultraviolet absorber, and a rust inhibitor. As the crosslinking agent, silicone polymer having an active hydrogen group bonded with silicon only at the side chain is preferable.

For example, the elastic layer 22 is a cured product of an addition curable liquid silicone rubber mixture including a conductive agent, a hydrosilylation catalyst, and a crosslinking agent.

The intermediate transfer belt is required to be flame-retardant for passage of a current at the transfer part. The elastic layer 22 may include a flame retardant. The flame retardants include a metal hydroxide such as magnesium hydroxide or aluminum hydroxide using the endothermic action, a platinum compound or a phenol type compound for suppressing the thermal decomposition, and an intumescent type compound, and a phosphoric acid ester condensation type compound having an oxygen blocking effect.

Further, the elastic layer 22 may include a reinforcing filler such as fumed silica, crystalline silica, wet silica, a fumed titanium oxide, or a cellulose nanofiber.

The method for manufacturing an elastic layer has no particular restriction. For example, the layer of an addition curable liquid silicone rubber mixture is formed on the outer surface of the substrate with a known method, and the liquid silicone rubber in the layer is cured. Examples of the curing method may include a heating method. The conditions for heating may be appropriately set according to the silicone rubber material to be used, and have no particular restriction. Examples thereof may include 0.5 to 300 minutes at 100 to 250°C. Heating may be performed at a plurality of stages by changing the temperature.

Further, a primer layer (not shown) may be provided between the base layer 21 and the elastic layer 22, if required, in order to improve the adhesion. The thickness of the primer layer is preferably from 0.1 µm to 3 µm from the viewpoint of reducing the cohesive failure in the primer layer.

Further, in order to improve the adhesion of the surface layer, the surface of the elastic layer may be surface treated with a known method such as excimer UV.

### Surface Layer

Then, the surface layer 23 will be described.

The surface layer is excellent in flexibility, and accordingly, is excellent in medium followability, and preferably is low in surface free energy, and has low friction in order to improve the toner releasability. As such a surface layer, mention may be made of a urethane resin having a flexibility, and having a high elasticity, and being strong against cracks. High surface free energy and friction are problems. For this reason, by mixing a modified resin including a silicone resin, an acrylic resin, or the like to the urethane resin, it is possible to from a urethane resin surface layer with a low surface free energy, and a low friction. **In** the present disclosure, the surface layer includes a silicone graft urethane resin. Examples thereof may include a silicone graft urethane resin obtained by introducing a structure including silicon derived from a silicone oil such as a single terminal diol modified silicone oil and an organic group into a urethane resin that is the main chain as the side chain.

### Fomation of Urethane Resin

The urethane resin includes a urethane bond resulting from the reaction between the terminal hydroxy group of polyol and the terminal isocyanate group of isocyanate. The polyol is the generic name of polyhydric alcohols having a plurality of hydroxy groups. Mention may be made of polyether polyol, polyester polyol, polycarbonate polyol, straight chain glycol, or the like. At least one selected from the group consisting of the polyols is preferably used.

The polyester polyol is the generic name of a polyol having two or more ester bonds and two or more hydroxy groups in the molecule, and is obtained by the condensation reaction between carboxylic acid such as adipic acid or sebacic acid and polyhydric alcohols. The polyester polyol may include, but is not limited to Nippolan 1004 manufactured by Tosoh Corporation, Kuraray polyols P-510, P-2010, and P-5010 manufactured by Kuraray Co., Ltd., or the like.

The polyether polyol is the generic name of polyols including two or more ether bonds and two or more hydroxy groups in the molecule, and can be obtained by the addition polymerization of ethylene oxide or propylene oxide. Polyether polyols may include, but is not limited to polyethylene glycol (PEG), polypropylene glycol (PPG), and polytetramethylene ether glycol (PTMEG).

The polycarbonate polyol is the generic name of polyols having two or more carbonate bonds and two or more hydroxy groups in the molecule, and can be obtained from the transesterification reaction between alkane diol such as 1,6-hexane diol and diester carbonate. The polycarbonate polyols may include, but are not limited to Nippolan 981 manufactured by Tosoh Corporation, DURANOL T5652 manufactured by Asahi Kasei Corporation, Kuraray polyol C-2090 manufactured by Kuraray Co., Ltd., and the like.

Other than the polyols, in addition to acrylic polyol, epoxy polyol, and polyolefin type polyol, polyol including an unreactive silicone group, polyol having a phosphorus structure exhibiting a flame resistance, or the like may be used. Preferably, mention may be made of a straight chain glycol having 2 to 8 carbon atoms such as 1,4-butane diol.

Furthe, as polyols, other than bifunctional ones, trifunctional polyols derived from a castor oil, tetrafunctional pentaerythritol, and the like may be used.

The number average molecular weight of polyol is preferably from 60 to 1500, further preferably from 190 to 400, and in particular preferably from 285 to 315. The hydroxyl value mgKOH/g of polyol is preferably from 110 to 1900, further preferably from 280 to 590, and in particularly preferably from 350 to 400.

Isocyanate is the generic name of the compounds having a plurality of isocyanate groups (-NCO) in the molecule, and mention may be made of aliphatic isocyanates and aromatic isocyanates, and derivatives thereof, and the like. As aliphatic isocyanates, mention may be made of xylylene diisocyanate (XDI), diphenylmethane diisocyanate (MDI), and trilene diisocyanate (TDI). As aliphatic isocyanates, mention may be made of hexamethylene diisocyanate (HDI), and the like.

Examples of the isocyanate for use in the surface layer 23 may include polyisocyanate of a HDI skeleton. As isocyanate, mention may be preferably made of at least one selected from the group consisting of biuret type polyisocyanate, adduct type polyisocyanate, and nurate type polyisocyanate.

Although the adduct type polyisocyanate has no particular restriction, mention may be made of DULANATE E402-B80B (manufactured by Asahi Kasei Corporation), and the like. Although the nurate type polyisocyanate has no particular restriction, mention may be made of DULANATE TPA-B80E (manufactured by Asahi Kasei Corporation).

Particularly, regarding the surface layer of the intermediate transfer belt having an elastic layer, from the viewpoints of the medium followability and the toner releasability, the biuret type polyisocyanate represented by the following formula (7) is preferably used. As the biuret type polyisocyanate, a commercially available product may be used. Examples thereof may include DULANATE SBB-70P (manufactured by Asahi Kasei Corporation).

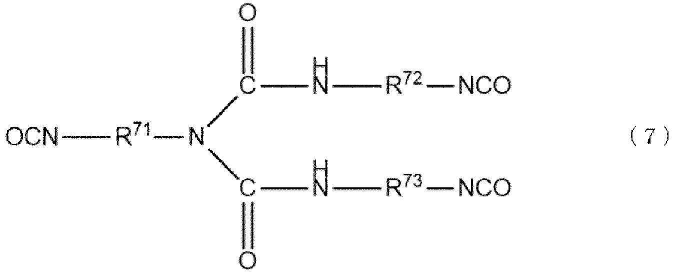

In the formula (7), R⁷¹ to R⁷³ respectively represent a straight chain or branched alkylene group having 1 to 12 carbon atoms. The formula (7) can assume the structure represented by the formula (1) in a silicone graft urethane resin.

As for polyisocyanate, from the viewpoints of the adjustment of the reaction rate, and the storage quality of the surface layer coating solution, a block polyisocyanate with the terminal isocyanate group blocked by a blocking agent such as methyl ethyl ketoxime (MEKO), or 3,5-dimethyl pyrazole (DMP) is preferably used. The block polyisocyanates may include, but are not limited to DULANATE SBB-70P, E402-B80B, and TPA-B80E manufactured by Asahi Kasei Corporation, or the like.

Further, the materials for the urethane resin of the surface layer 23 may include additives such as a chain extender and a crosslinking agent. As the chain extender, and the crosslinking agent, mention may be made of glycol such as ethylene glycol or 1,4-butane diol, hexane triol, trimethylolpropane, amines, and the like. However, the present invention is not limited thereto.

The mixing ratio in the mixture of polyol and polyisocyanate is generally preferably 0.8 to 1.5, and further preferably 0.9 to 1.2 in terms of the molar ratio (NCO/OH) of the hydroxy group (OH) included in the polyol, and the isocyanate group (NCO) included in the polyisocyanate.

### Formation of Silicone Graft Urethane Resin

As the means for imparting a urethane resin with the characteristics of low friction / low surface energy, mention may be made of the formation of a silicone / urethane copolymer including the structure derived from silicone in the urethane resin. As the kinds of the silicone / urethane copolymer, mention may be made of a random copolymer, an alternate copolymer, a block copolymer, and a graft copolymer. In the present disclosure, a silicone graft urethane resin is used. Particularly, a graft copolymer of the structure in which the main chain is a urethane rubber, and the side chain includes silicon derived from a modified silicone oil and an organic group is preferable.

A silicone graft urethane resin can be formed by mixing polyol and polyisocyanate that are the materials for a urethane resin and a single terminal modified silicone oil such as a single terminal diol modified silicone oil at given ratios for heating. Namely, the silicone graft urethane resin is preferably a cured product of a composition including polyol, polyisocyanate, and a single terminal modified silicone oil. The single terminal modification is preferably modification by a hydroxy group. Bonding between the hydroxy group of a single terminal modified silicone oil and a terminal isocyanate of polyisocyanate results in a silicone graft urethane resin in which a silicone structure has been introduced into a urethane resin.

The composition may include a catalyst, a solvent, and the like, if required.

The single terminal modified silicone oil is preferably at least one selected from the group consisting of a single terminal diol modified silicone oil, and a single terminal carbinol modified silicone oil. Examples of the single terminal carbinol modified silicone oil may include X-22-170DX (manufactured by Shin-Etsu Chemical Co., Ltd.).

The single terminal diol modified silicone oil is preferably the one represented by the following formula (8).

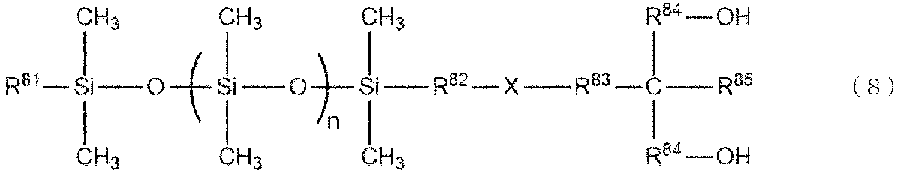

In the structural formula (8), n is an integer of 0 to 100, R⁸¹ and R⁸⁵ are each independently a straight chain or branched alkyl group having from 1 to 6 carbon atoms, and R⁸² to R⁸⁴ each independently represent a straight chain or branched alkylene group having from 1 to 6 carbon atoms. Further, in the formula (8), X represents any of an oxygen atom, a sulfur atom, or a single bond.

The number average molecular weight of the single terminal diol modified silicone oil represented by the formula (8) is preferably from 1000 to 15000. The hydroxyl value of the single terminal diol modified silicone oil represented by the formula (8) is preferably from 8 to 115 mgKOH/g. Examples of the single terminal diol modified silicone oil may include, but are not limited to X-22-176DX, X-22-176F, and the like manufactured by Shin-Etsu Chemical Co., Ltd., and Silaplane series FM-DA11, FM-DA21, and the like manufactured by JNC Co., Ltd.

The method for forming the surface layer 23 including urethane rubber includes the following method: a coating solution of the surface layer resin composition including the materials for the silicone graft urethane resin is applied by spray coating or dip coating, for curing by heating or curing by light irradiation with ultraviolet rays, or the like. For the coating solution of the surface layer resin composition, in consideration of the compatibility with respective materials, the one obtained by adding alcohols such as methanol and ethanol, aromatic hydrocarbon type solvents such as xylene and toluene, ester type solvents such as ethyl acetate and butyl acetate, or a volatile solvent such as 2-butanone can be used.

The thickness of the surface layer 23 is preferably 3 to 15 µm, and more preferably 5 to 10 µm from the viewpoint of preventing hindering of the flexibility of the elastic layer. In order to improve the adhesiveness between the elastic layer 22 and the surface layer 23, the outer circumferential surface of the elastic layer 22 may be surface treated. As the method for the surface treatment, mention may be made of corona discharge, excimer UV irradiation, or the like.

Measurement of Martens Hardness and Elastic Deformation Power ηIT by Nanoindentation Method

The Martens hardness and the elastic deformation power ηIT of the outer surface of the surface layer can be evaluated specifically in the following manner.

The electrophotographic member is cut out into a sheet of 20 mm in length, and 20 mm in width, so that the Martens hardness and the elastic deformation power can be measured by the nanoindentation method. The Martens hardness and the elastic deformation power ηIT can be calculated from the load - displacement curve obtained with a commercially available device according to ISO 14577, in accordance with the procedure of the indentation test specified by ISO 14577. In the present disclosure, a nano-indenter device (PICODENTOR HM500 manufactured by FISCHER Co.) according to the ISO standard is used.
Measurement environment: 23°C, relative humidity 40%
Indenter: Vickers indenter
Measurement load: 260 µN
Measurement point: 3-point average

### Measurement of Silicon Element Amount of Outer Surface by XPS

The silicon element amount of the outer surface of the surface layer can be measured using X-ray photoelectron spectroscopic analysis (XPS) in the following manner. The surface layer is cut out into a size of 5 mm in length and 5 mm in width, and is bonded onto a sample stand with the outer surface facing out using a carbon tape, and the outer surface is analyzed by an XPS device. The silicon element amount can be measured from the detected peak intensity of the silicon element. In the present disclosure, the measurement is performed by the following XPS device and under the following measurement conditions.
Used device: PHI5000 Versa Probe II manufactured by ULVAC-PHI, INCORPORATED. Co.
Exposure ray: Al-Kα ray
Beam diameter: 100 µm
Output: 25 W 15 kV
Photoelectron collection angle: 45°
Pass Energy: 58.70 eV
Step size: 0.125 eV
XPS peak: Si2p, N1s, C1s, O1s
Measurement range: 300 µm × 200 µm

### Regarding hexadecane contact angle change rate A2/A1 of outer surface of surface layer

As the indicator for confirming whether the graft shape of the surface layer has been impaired or not upon formation of an image, a hexadecane contact angle change rate was introduced. A1 represents the hexadecane contact angle of the outer surface of the surface layer, and A2 represents the hexadecane contact angle after wiping the surface layer 50 times while applying a force of 5 N with Bemcot paper impregnated with hexane. Then, the contact angle change rate is defined as A2/A1. For example, an A2/A1 of around 1.0 indicates that the graft shape of the surface layer 23 has not been impaired upon formation of an image, and it is indicated that the smaller A2/A1 is than 1.0, the more the graft shape is impaired. Further, when the addition amount of the single terminal diol modified silicone oil is increased, the contact angle immediately after hexane wiping is conversely increased, so that the A2/A1 becomes larger than 1.0. This is considered due to the following: the unreacted silicone oil came up to the outer surface in a manner as to cover the graft shape, and the surface layer was wiped with hexane, thereby removing the unreacted silicone oil; so that the graft shape appeared.

The A2/A1 can be evaluated specifically with the following method.

The obtained intermediate transfer belt was cut out into a sheet of 50 mm in length, and 50 mm in width, and the surface layer was wiped with Bemcot paper impregnated with hexane while applying a force of 5 N 50 times thereto. The contact angle variation A2/A1 was evaluated where A1 represents the hexadecane contact angle of the surface layer before wiping with hexane, and A2 represents the hexadecane contact angle of the surface layer after wiping with hexane. In the present disclosure, the evaluation was performed under the foregoing measurement conditions and the following measurement device.

### Evaluation Method of Hexadecane Contact Angle

As for the surface layer outer surface of the intermediate transfer belt, the hexadecane contact angle was measured. For the measurement, a contact angle meter (trade name: portable contact angle meter PCA-11, manufactured by Kyowa Interface Science Co., Ltd.) was used. The measurement environment was 23°C, and a relative humidity of 55%. Thus, at a hexadecane drip of 1.5 µL, the droplet was added dropwise onto the outer surface of the surface layer. The angle formed between the outer surface of the surface layer and the hexadecane droplet endpoint was referred to as the hexadecane contact angle. The average value of the hexadecane contact angle measurement values at 3 points of the outer surface of the surface layer was assumed to be the evaluation result.

### Image forming apparatus

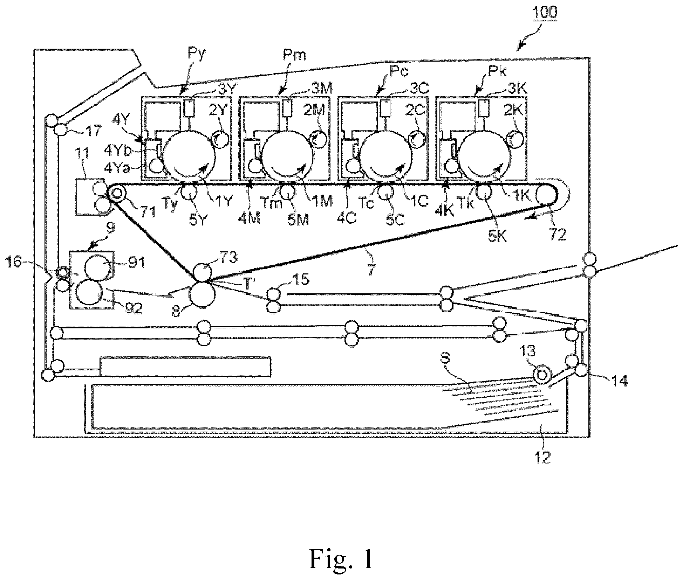

An image forming apparatus includes, for example, the electrophotographic member as the intermediate transfer member. The example of the image forming apparatus using the elastic intermediate transfer belt as the intermediate transfer member will be described by reference to FIG. 1.

An electrophotographic image forming apparatus 100 of FIG. 1 is a color electrophotographic image forming apparatus (color laser printer). The electrophotographic image forming apparatus 100 includes an intermediate transfer member in accordance with one aspect of the present disclosure as an intermediate transfer belt 7. Then, image forming units Py, Pm, Pc, and Pk of respective colors of yellow (Y), magenta (M), cyan (C), and black (K) are arranged sequentially in the direction of movement along the flat portion of the intermediate transfer belt 7 of the intermediate transfer member.

Here, 1Y, 1M, 1C, and 1K are respective electrophotographic photosensitive members, 2Y, 2M, 2C and 2K are respective charging rollers; 3Y, 3M, 3C and 3K are respective laser exposure devices; 4Y, 4M, 4C and 4K are respective developing devices, and 5Y, 5M, 5C, and 5K are respective primary transfer rollers. Since the image forming units Py, Pm, Pc, and Pk have the same basic configuration, the details of the image forming unit will be explained by referring only to the yellow image forming unit Py.

The yellow image forming unit Py has the drum-type electrophotographic photosensitive member (hereinafter also referred to as "photosensitive drum" or "first image bearing member") 1Y as an image bearing member. The photosensitive drum 1Y is formed by using an aluminum cylinder as a substrate and laminating a charge generating layer, a charge transport layer and a surface protection layer in this order thereon.

Also, the yellow image forming unit Py is equipped with the charging roller 2Y as charging means. By applying a charging bias to the charging roller 2Y, the surface of the photosensitive drum 1Y is uniformly charged.

A laser exposure device 3Y as image exposure means is arranged above the photosensitive drum 1Y. The laser exposure device 3Y scans and exposes the uniformly charged surface of the photosensitive drum 1Y according to image information to form an electrostatic latent image of the yellow color component on the surface of the photosensitive drum 1Y.

The electrostatic latent image formed on the photosensitive drum 1Y is developed with toner, which is a developer, by the developing device 4Y as developing means. That is, the developing device 4Y includes a developing roller 4Ya as a developer carrying member and a regulating blade 4Yb as a developer amount regulating member, and contains yellow toner as the developer.

The developing roller 4Ya supplied with yellow toner is in light pressure contact with the photosensitive drum 1Y in the developing section, and is rotated in the forward direction with a speed difference from the photosensitive drum 1Y. The yellow toner conveyed to the developing section by the developing roller 4Ya adheres to the electrostatic latent image formed on the photosensitive drum 1Y as a result of applying a developing bias to the developing roller 4Ya. A visible image (yellow toner image) is thus formed on the photosensitive drum 1Y.

The intermediate transfer belt 7 is stretched around a drive roller 71, a tension roller 72, and a driven roller 73, and is moved (rotated) in the direction of the arrow in the drawing while being in contact with the photosensitive drum 1Y.

The yellow toner image formed on the photosensitive drum 1Y (on the first image bearing member) that has reached the primary transfer section Ty is primarily transferred onto the intermediate transfer belt 7 by a primary transfer member (primary transfer roller 5Y) arranged to face the photosensitive drum 1Y with the intermediate transfer belt 7 interposed therebetween.

Similarly, the image forming operation described above is performed in each of the magenta (M), cyan (C), and black (K) image forming units Pm, Pc, and Pk along with the movement of the intermediate transfer belt 7. Toner images of four colors of yellow, magenta, cyan, and black are superimposed on the intermediate transfer belt 7.

The four-color toner layers are transported along with the movement of the intermediate transfer belt 7 and are collectively transferred onto a transfer material S (hereinafter also referred to as a "second image bearing member"), which is transported at a predetermined timing, by a secondary transfer roller 8 as secondary transfer means at a secondary transfer section T'. In such secondary transfer, a transfer voltage of several kV is normally applied in order to ensure a sufficient transfer rate.

The transfer material S is supplied from a cassette 12 in which the transfer material S is accommodated to the transport path by a pickup roller 13. The transfer material S supplied to the transport path is transported to the secondary transfer section T' in synchronization with the four-color toner image transferred onto the intermediate transfer belt 7 by a transport roller pair 14 and a registration roller pair 15.

The toner image transferred to the transfer material S is fixed by a fixing device 9 to become, for example, a full-color image. The fixing device 9 has a fixing roller 91 provided with a heating means and a pressure roller 92, and fixes the unfixed toner image on the transfer material S by heating and pressurizing the image. After that, the transfer material S is discharged out of the apparatus by a pair of transport rollers 16, a pair of discharge rollers 17, and the like.

A cleaning unit 11 for the intermediate transfer belt 7 is disposed downstream of the secondary transfer section T' in the driving direction of the intermediate transfer belt 7, and removes the untransferred toner, which was not transferred onto the transfer material S at the secondary transfer portion T' and remained on the intermediate transfer belt 7.

The process of electrically transferring, as described above, the toner image from the photosensitive member 1 to the intermediate transfer belt 7 and from the intermediate transfer belt 7 to the transfer material S is performed repeatedly. Further, by repeating recording on a large number of transfer materials S, the electrical transfer process is further performed repeatedly.

### Examples

Below, by way of Examples and Comparative Examples, the present disclosure will be described in further details. The present disclosure is not limited to the following embodiments at all.

### Manufacturing of Intermediate Transfer Belt

### Example 1

### Base Layer

As a base layer, an endless belt made of polyimide with an inside diameter of 370 mm, a width of 370 mm, and a thickness of 80 µm was prepared.

### Primer Layer

The outer circumferential surface of the base layer was irradiated with excimer UV, and then, a primer (trade name: DY39-051A/B; manufactured by Toray Dow Corning Co.) was applied thereto, and heating was performed at 160°C for 10 minutes.

### Manufacturing of liquid silicone rubber mixture solution for elastic layer

As the conductive agent, an ion liquid type antistatic agent (trade name: FC-4400, manufactured by 3M Japan Co.) was used.

The conductive agent was added in a ratio of 0.2 part by mass with respect to 100 parts by mass of addition curable liquid silicone rubber (trade name: TSE3032 A/B (mass ratio A1000 : B8), manufactured by Momentive Performance Materials Co.), thereby manufacturing a mixture 1.

Then, the one obtained by dissolving 0.2 part by mass of 1-ethynyl-1-cyclohexanol (manufactured by Tokyo Chemical Industry Co., Ltd.) of a curing retardant in toluene in the same amount of mass was added into the mixture 1, resulting in a mixture 2.

Then, 0.1 part by mass of a hydrosilylation catalyst (platinum catalyst: a mixture of a 1,3-divinyl tetramethyl disiloxane platinum complex, 1,3-divinyl tetramethyl disiloxane, and 2-propanol) was added to the mixture 2, resulting in a mixture 3.

Further, as a crosslinking agent, 1.5 parts by mass of a silicone polymer having an active hydrogen group bonded with silicon only the side chain (trade name: HMS-301, manufactured by Gelest Co.) was weighed. This was added to the mixture 3, and the resulting mixture was sufficiently mixed, and stirred / deaerated by mean of a stirring deaeration device (trade name: HM-500, manufactured by KEYENCE Co.), resulting in a liquid silicone rubber mixture solution.

### Formation of laminated body of base layer and elastic layer

Subsequently, a polyimide belt serving as the base layer was attached to the cylindrical core, and further, a ring nozzle for discharging rubber was attached coaxially onto the core. Using a feeding pump, the liquid silicone rubber mixture solution was supplied to the ring nozzle, and was discharged through a slit, thereby coating the mixture solution on the base layer. At this step, the relative moving speed and the feeding pump discharge amount were adjusted so that the elastic layer after curing may have a thickness of 260 µm. The belt was placed in a heating furnace while being attached to the core, and was heated at 180°C for 10 minutes, thereby performing rubber crosslinking. After cooling, the belt was removed from the core, resulting in a belt including the elastic layer stacked thereon.

### Surface Treatment of Elastic Layer

**In** order to improve the adhesion between the elastic layer and the surface layer, for the surface reforming of the elastic layer, the surface treatment of the elastic layer was performed using an excimer lamp (manufactured by M. D. COM. INC.) for emitting a 172-nm single wavelength as an UV irradiation unit. A belt of lamination of the elastic layer and the base layer is fitted into a cylindrical core. Irradiation was performed for 30 minutes in the space into which a nitrogen gas and air have flown while rotating the core at a rotation speed of 5 rpm from a distance of 1 mm from the excimer UV lamp surface.

### Surface Layer

Then, the resin composition coating solution of the surface layer was prepared with the following materials. Incidentally, the substituents in the formulae (1) to (6) included in respective resins when respective materials have formed silicone graft urethane resins will be shown together.

### (a) Polyester polyol

(trade name: POLYCASTOR #30, manufactured by ITOH OIL CHEMICALS CO., LTD.) 99.5 parts by mass

### (b) Single terminal diol modified silicone oil

(trade name: X-22-176F, manufactured by Shin-Etsu Chemical Co., Ltd.) 0.5 part by mass

### (c) Nurate type block type polyisocyanate

(trade name: DULANATE TPA-B80E, manufactured by Asahi Kasei Corporation) 91.3 parts by mass

### (d) Catalyst (trade name: U-CAT 18X, manufactured by San-Apro Ltd.) 0.14 part by mass

To the materials of (a) to (d), 2-butanone was added as a solvent with stirring by a roller mixer for 3 hours, resulting in a resin composition coating solution of the surface layer with a solid content ratio of 20 mass%. At this step, the molar ratio (NCO/OH) of the hydroxy group (OH) included in polyol and the isocyanate group (NCO) included in polyisocyanate in the resin composition is 1.0.

Subsequently, the laminated body of the base layer and the elastic layer was mounted on a cylindrical core, and the resin composition coating solution of the surface layer was spray coated onto the elastic layer so that the film thickness of the surface layer after drying might become 6 µm. The resulting lamination was placed while being mounted on the core in a heating surface, and was heated at 140°C for 1 hour, thereby curing the coating film. As a result, an intermediate transfer belt with the surface layer formed on the elastic layer was manufactured.

### Examples 2 to 13, Comparative Examples 1 to 3

An intermediate transfer belt was manufactured in the same manner as in Example 1 with the materials and the formulation shown in Table 1. The materials described in Table 1 are as follows. Further, the substituents in (1) to (6) included in a silicone graft urethane resin when respective materials have formed the silicone graft urethane resin will be shown.

### (a) Polyol

Polyester polyol

### Example 2, Comparative Example 1:

Trade name: POLYCASTOR #30 (manufactured by ITOH OIL CHEMICALS CO., LTD.)
Polycarbonate polyol

### Example 3:

Trade name: Nippolan 981 (manufactured by Tosoh Corporation)
Polyether polyol

### Example 4:

Polyethylene glycol 1000 (manufactured by KISHIDA CHEMICAL Co., Ltd.)
(X²¹: alkylene group having two carbon atoms, m in the formula (3) is 22 to 23)

### Example 5:

Polyethylene glycol 200 (manufactured by KISHIDA CHEMICAL Co., Ltd.)
(X²¹: an alkylene group having two carbon atoms, m in the formula (3) is 4 to 5)

### Example 6:

Polypropylene glycol 400 (manufactured by KISHIDA CHEMICAL Co., Ltd.)
(X²¹: an alkylene group having 3 carbon atoms, m in the formula (3) is 8 to 9)

### Examples 7 to 12, Comparative Examples 2 and 3:

Polyethylene glycol 300 (manufactured by KISHIDA CHEMICAL Co., Ltd.) (X²¹: an alkylene group having 2 carbon atoms, m in the formula (3) is 6 to 7) Glycol

### Example 13:

1,4-butane diol (manufactured by KISHIDA CHEMICAL Co., Ltd.)

### (b) Isocyanate

### Example 13:

Nurate type block polyisocyanate DULANATE TPA-B80E (manufactured by Asahi Kasei Corporation)

### Examples 2 to 12, Comparative Examples 2 and 3:

Biuret type block polyisocyanate DULANATE SBB-70P (manufactured by Asahi Kasei Corporation)

### Comparative Example 1:

Adduct type block polyisocyanate DULANATE E402-B80B (manufactured by Asahi Kasei Corporation)

### (c) Terminal modified silicone oil

### Example 12:

Single terminal carbinol modified silicone oil X-22-170DX (manufactured by Shin-Etsu Chemical Co., Ltd.)

### Comparative Example 2:

Both terminal diol modified silicone oil KF-6003 (manufactured by Shin-Etsu Chemical Co., Ltd.)

**[Table 1]**

| | Component | Kind | Example 1 | Example 2 | Example 3 | Example 4 | Example 5 | Example 6 | Example 7 | Example 8 |
|---|---|---|---|---|---|---|---|---|---|---|
| Surface layer resin composition | (a) Polyol | Polyether polyol | - | - | - | 99.5 | 99.5 | 99.5 | 99.5 | 99.95 |
| | | Polyester polyol | 99.5 | 99.5 | - | - | - | - | - | - |
| | | Polycarbonate polyol | - | - | 99.5 | - | - | - | - | - |
| | | Glycol | - | - | - | - | - | - | - | - |
| | (b) Isocyanate | Biuret type isocyanate | - | 112.1 | 82.6 | 83.4 | 416.7 | 207.3 | 276.6 | 226.3 |
| | | Adduct type isocyanate | - | - | - | - | - | - | - | - |
| | | Nurate type isocyanate | 91.3 | - | - | - | - | - | - | - |
| | (c) Terminal modified silicone oil | Single terminal carbinol modified silicone oil | - | - | - | - | - | - | - | - |
| | | Single terminal diol modified silicone oil | 0.5 | 0.5 | 0.5 | 0.5 | 0.5 | 0.5 | 0.5 | 0.05 |
| | | Both terminal diol modified silicone oil | - | - | - | - | - | - | - | - |
| | (d) Catalyst | Triethylmethylammonium 2-ethylhexanoate | 0.14 | 0.17 | 0.12 | 0.13 | 0.63 | 0.31 | 0.42 | 0.34 |

| | Component | Kind | Example 9 | Example 10 | Example 11 | Example 12 | Example 13 | C.E. 1 | C.E. 2 | C.E. 3 |
|---|---|---|---|---|---|---|---|---|---|---|
| Surface layer resin composition | (a) Polyol | Polyether polyol | 99.9 | 99.0 | 95.0 | 99.5 | - | - | 99.5 | 100.0 |
| | | Polyester polyol | - | - | - | - | - | 99.0 | - | - |
| | | Polycarbonate polyol | - | - | - | - | - | - | - | - |
| | | Glycol | - | - | - | - | 99.5 | - | - | - |
| | (b) Isocyanate | Biuret type isocyanate | 277.7 | 275.2 | 264.9 | 276.6 | - | - | 276.7 | 278.0 |
| | | Adduct type isocyanate | - | - | - | - | - | 187.8 | - | - |
| | | Nurate type isocyanate | - | - | - | - | 748.0 | - | - | - |
| | (c) Terminal modified silicone oil | Single terminal carbinol modified silicone oil | - | - | - | 0.5 | - | - | - | - |
| | | Single terminal diol modified silicone oil | 0.1 | 1.0 | 5.0 | - | 0.5 | 1.0 | - | - |
| | | Both terminal diol modified silicone oil | - | - | - | - | - | - | 0.5 | - |
| | (d) Catalyst | Triethylmethylammonium 2-ethylhexanoate | 0.42 | 0.41 | 0.40 | 0.42 | 1.12 | 0.28 | 0.42 | 0.42 |

In the Table 1, "C.E." indicates "Comparative Example".

The Martens hardness and the elastic deformation power, and the silicon element amount of the outer surface of the surface layer of each intermediate transfer belt obtained in Examples 1 to 13 and Comparative Examples 1 to 3 shown in Table 1 were evaluated.

Measurement of Hardness and Elastic Deformation Power by Nanoindentation Method

The resulting intermediate transfer belt was cut out into a sheet of 20 mm in length and 20 mm in width, and the Martens hardness and the elastic deformation power were measured with the nanoindentation method on the basis of the foregoing procedure.

### Measurement of Silicon Element Amount of Outer Surface by XPS

The resulting intermediate transfer belt was cut out into sizes of 5 mm in length and 5 mm in width, and was bonded to a sample stand using a carbon tape with the outer surface of the surface layer facing out. Thus, the outer surface was analyzed by means of an XPS device. The conditions for the analysis were as described above.

### Hexadecane Contact Angle Change Rate A2/A1 of Surface Layer Outer Surface

The contact angle change rate is referred to as A2/A1 where A1 represents the hexadecane contact angle of the outer surface of the surface layer of the intermediate transfer belt, and A2 represents the hexadecane contact angle after wiping the surface layer outer surface by Bemcot impregnated 50 times with hexane while being applying a force of 5 N. Measurement was performed on the basis of the foregoing procedure.

### Evaluation

The evaluation methods of the static friction coefficient µ, the hexadecane contact angle, and the density uniformity that are the evaluation items will be described below.

### Evaluation Method of Static Friction Coefficient µ

The static friction coefficient µ of the outer surface of the surface layer of the intermediate transfer belt was measured. For the measurement of µ, Handy Heidon (trade name: Heidon muse TYPE; 94i-II, manufactured by SHINTO Scientific Co., Ltd.) was used. The measurement environment was 23°C, and a relative humidity of 55%, and the average value of µ measurement values at 3 points of the surface layer was assumed to be the evaluation result. When the static friction coefficient µ was 0.60 or less, it was determined that there was no problem in terms of the abrasion resistance.

### Evaluation Method of Hexadecane Contact Angle

For the surface layer of the intermediate transfer belt, the hexadecane contact angle was measured by the foregoing procedure. When the hexadecane contact angle was 10° or more, it was determined that there was no problem in terms of the toner releasability.

### Evaluation of Density Uniformity

Evaluation of the density uniformity was carried out by mounting each intermediate transfer belt shown in the present Example and Comparative Example on a full color electrophotographic image forming apparatus (trade name: image PRESS C800, manufactured by CANON Corp.).

Under environment of a temperature of 25°C and a relative humidity of 55%, a entirely secondary color solid image of cyan and magenta was formed on an A4-size emboss paper (trade name: LEATHAC 66, 250 g/m², manufactured by Tokushu Tokai Paper Co., Ltd.), and was evaluated according to the following criteria.
Rank A: no image unevenness is observed, and good
Rank B: slight image unevenness is observed on a part of the emboss paper depressed portion
Rank C: image unevenness is observed in a region of about 20% of the emboss paper depressed portion
Rank D: image unevenness is observed over half or larger of the emboss paper depressed portion
In the cases of the ranks A to C, the density uniformity was determined to be good.

The evaluation results of respective Examples and Comparative Examples are shown in Tables 2-1 and 2-2. Respective Examples have been confirmed to be higher in the abrasion resistance and the density uniformity relative to Comparative Examples 1 to 3. This can be considered due to the following. By adopting a silicone graft urethane resin, and setting the hardness and the elastic deformation power ηIT of the surface layer within respective specific ranges, it was possible to allow the electrophotographic member to have sufficient followability to the medium, and to improve the toner releasability.

Further, Examples 7 and 10 have been confirmed to be higher in density uniformity relative to Examples 8 and 11 and Comparative Examples 1 to 3. This can be considered due to the following. By setting the silicon element amount of the surface layer outer surface within a specific range in addition to setting the hardness and the elastic deformation power ηIT of the surface layer within respective specific ranges, it was possible to more improve the toner releasability.

For Example 8, the silicon element amount of the surface layer outer surface was low, and hence the static friction coefficient µ became slightly higher. For Example 11, a diol modified silicone oil seeped to the outer surface of the surface layer, so that the hexadecane contact angle was reduced. For this reason, conceivably, the toner releasability was slightly reduced, which affected the density uniformity.

For Comparative Example 1, the Martens hardness of the surface layer was too low. For this reason, conceivably, the toner releasability was reduced, resulting in the reduction of the density uniformity. For Comparative Example 2, it can be considered as follows. Use of a both terminal diol modified silicone oil resulted in the formation of a silicone block urethane resin, resulting in the reduction of the Martens hardness of the surface layer, which reduced the density uniformity. For Comparative Example 3, it can be considered as follows. The static friction coefficient µ was very high, and the hexadecane contact angle was very low. For this reason, the toner releasability became lower, resulting in the reduction of the density uniformity.

**[Table 2-1]**

| | Component | Kind | Example 1 | Example 2 | Example 3 | Example 4 | Example 5 | Example 6 | Example 7 | Example 8 |
|---|---|---|---|---|---|---|---|---|---|---|
| Surface layer resin composition | (a) Polyol | Polyether polyol | - | - | - | 99.5 | 99.5 | 99.5 | 99.5 | 99.95 |
| | | Polyester polyol | 99.5 | 99.5 | - | - | - | - | - | - |
| | | Polycarbonate polyol | - | - | 99.5 | - | - | - | - | - |
| | | Glycol | - | - | - | - | - | - | - | - |
| | (b) Isocyanate | Biuret type isocyanate | - | 112.1 | 82.6 | 83.4 | 416.7 | 207.3 | 276.6 | 226.3 |
| | | Adduct type isocyanate | - | - | - | - | - | - | - | - |
| | | Nurate type isocyanate | 91.3 | - | - | - | - | - | - | - |
| | (c) Terminal modified silicone oil | Single terminal carbinol modified silicone oil | - | - | - | - | - | - | - | - |
| | | Single terminal diol modified silicone oil | 0.5 | 0.5 | 0.5 | 0.5 | 0.5 | 0.5 | 0.5 | 0.05 |
| | | Both terminal diol modified silicone oil | - | - | - | - | - | - | - | - |
| | (d) Catalyst | Triethylmethylammonium 2-ethylhexanoate | 0.14 | 0.17 | 0.12 | 0.13 | 0.63 | 0.31 | 0.42 | 0.34 |
| Physical property | Martens hardness (N/mm²) | | 13 | 12 | 12 | 12 | 18 | 13 | 15 | 15 |
| | Elastic deformation power ηIT (%) | | 85 | 90 | 90 | 90 | 75 | 85 | 85 | 85 |
| | Surface layer silicon element amount (atomic%) | | 15 | 15 | 15 | 15 | 15 | 15 | 15 | 5 |
| Presence or absence of formulae (1) to (6) | Formula(1) | | - | Present | Present | Present | Present | Present | Present | Present |
| | Formulae (2-1) to (2-3) | | (2-2) | (2-2) | (2-3) | (2-1) | (2-1) | (2-1) | (2-1) | (2-1) |
| | Formula(3) | | - | - | - | Present | Present | Present | Present | Present |
| | Formula(4) | | Present | Present | Present | Present | Present | Present | Present | Present |
| | Formula(5) | | Present | Present | Present | Present | Present | Present | Present | Present |
| | Formula(6) | | Present | Present | Present | Present | Present | Present | Present | Present |
| Evaluation item | A2/A1 | | 1.2 | 1.2 | 1.2 | 1.2 | 0.9 | 1.0 | 1.0 | 0.2 |
| | Static friction coefficient µ | | 0.19 | 0.19 | 0.20 | 0.20 | 0.18 | 0.16 | 0.23 | 0.50 |
| | Hexadecane contact angle (°) | | 27 | 27 | 30 | 30 | 35 | 33 | 34 | 33 |
| | Density uniformity | | B | B | B | B | B | B | A | B |

**[Table 2-2]**

| | Component | Kind | Example 9 | Example 10 | Example 11 | Example 12 | Example 13 | C.E. 1 | C.E. 2 | C.E. 3 |
|---|---|---|---|---|---|---|---|---|---|---|
| Surface layer resin composition | (a) Polyol | Polyether polyol | 99.9 | 99.0 | 95.0 | 99.5 | - | - | 99.5 | 100.0 |
| | | Polyester polyol | - | - | - | - | - | 99.0 | - | - |
| | | Polycarbonate polyol | - | - | - | - | - | - | - | - |
| | | Glycol | - | - | - | - | 99.5 | - | - | - |
| | (b) Isocyanate | Biuret type isocyanate | 277.7 | 275.2 | 264.9 | 276.7 | - | - | 276.7 | 278.0 |
| | | Adduct type isocyanate | - | - | - | - | - | 187.8 | - | - |
| | | Nurate type isocyanate | - | - | - | - | 748.0 | - | - | - |
| | (c) Terminal modified silicone oil | Single terminal carbinol modified silicone oil | - | - | - | 0.5 | - | - | - | - |
| | | Single terminal diol modified silicone oil | 0.1 | 1.0 | 5.0 | - | 0.5 | 1.0 | - | - |
| | | Both terminal diol modified silicone oil | - | - | - | - | - | - | 0.5 | - |
| | (d) Catalyst | Triethylmethylammonium 2-ethylhexanoate | 0.42 | 0.41 | 0.40 | 0.42 | 1.12 | 0.28 | 0.42 | 0.42 |
| Physical property | Martens hardness (N/mm²) | | 15 | 15 | 15 | 13 | 150 | 5 | 5 | 15 |
| | Elastic deformation power ηIT (%) | | 85 | 85 | 85 | 85 | 40 | 85 | 85 | 85 |
| | Surface layer silicon element amount (atomic%) | | 10 | 20 | 25 | 15 | 15 | 15 | 15 | 0 |
| Presence or absence of form ulae (1) to (6) | Formula(1) | | Present | Present | Present | Present | - | - | Present | Present |
| | Formulae (2-1) to (2-3) | | (2-1) | (2-1) | (2-1) | (2-1) | - | (2-2) | (2-1) | (2-1) |
| | Formula(3) | | Present | Present | Present | Present | - | - | Present | Present |
| | Formula(4) | | Present | Present | Present | Present | Present | Present | - | - |
| | Formula(5) | | Present | Present | Present | Present | Present | Present | Present | - |
| | Formula(6) | | Present | Present | Present | - | Present | Present | - | - |
| Evaluation item | A2/A1 | | 0.4 | 1.0 | 1.9 | 1.0 | 1.0 | 1.1 | 1.2 | 1.0 |
| | Static friction coefficient µ | | 0.35 | 0.18 | 0.20 | 0.18 | 0.11 | 0.22 | 0.50 | 1.00 |
| | Hexadecane contact angle (°) | | 34 | 34 | 18 | 34 | 35 | 32 | 25 | 6 |
| | Density uniformity | | A | A | C | B | B | D | D | D |

**In** the Tables 2-1 and 2-2, "C.E." indicates "Comparative Example".

Whether the formulae (1) to (6) are present or not indicates whether the silicone graft urethane resin has each structure described above or not. The "-" indicates that the corresponding structure is not possessed.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An electrophotographic member comprising:
a base layer;
an elastic layer on the base layer; and
a surface layer on the elastic layer, wherein
the surface layer comprises a silicone graft urethane resin,
an elastic deformation power ηIT calculated from a load displacement curve, obtained with a nanoindentation test according to ISO 14577 by bringing a Vickers indenter into contact with an outer surface of the surface layer and setting a test load at 260 µN, is 30 to 90%, and
a Martens hardness determined by the nanoindentation test at the outer surface of the surface layer is 12 to 200 N/mm².

2. The electrophotographic member according to claim 1, wherein
a silicon element amount of the outer surface of the surface layer detected by X-ray photoelectron spectroscopy is 10 to 25 atomic% on the basis of a total amount of Si, N, C, and O.

3. The electrophotographic member according to claim 1 or 2, wherein
the silicone graft urethane resin has
a structure represented by formula (1) below, and
at least one selected from the group consisting of a structure represented by formula (2-1) below, a structure represented by formula (2-2) below, and a structure represented by formula (2-3) below in a molecule, 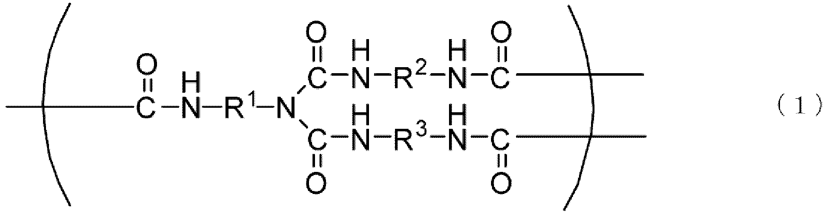
in the structural formula (1), R¹ to R³ each independently represent a straight chain or branched alkylene group having 1 to 12 carbon atoms, and 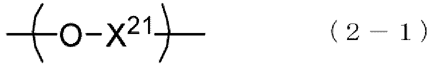 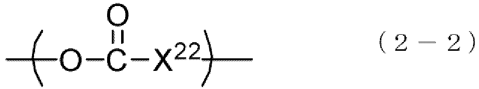 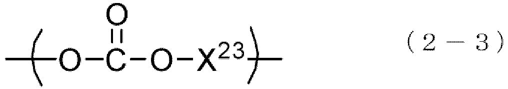
in the formulae (2-1) to (2-3), X²¹ to X²³ each independently represent a straight chain or branched alkylene group having 1 to 12 carbon atoms.

4. The electrophotographic member according to claim 3, wherein
the silicone graft urethane resin has a structure represented by formula (3) below in a molecule, 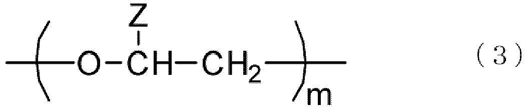
in the structural formula (3), Z represents any of a hydrogen atom or a methyl group, and m represents an integer of 3 to 30.

5. The electrophotographic member according to claim 4, wherein in the formula (3), Z is a hydrogen atom, and m is an integer of 5 to 7.

6. The electrophotographic member according to any one of claims 1 to 5, wherein
the silicone graft urethane resin has a structure represented by formula (4) below, a structure represented by the following formula (5), and a structure represented by formula (6) below in a molecule, 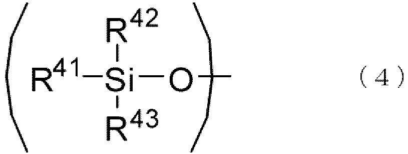 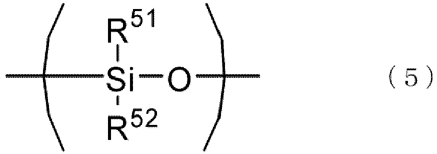 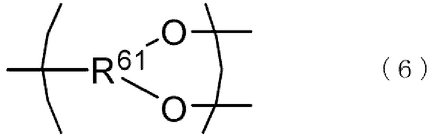
in the formula (4), R⁴¹ to R⁴³ each independently represent a straight chain or branched alkyl group having 1 to 6 carbon atoms,
in the formula (5), R⁵¹ and R⁵² each independently represent a straight chain or branched alkyl group having 1 to 6 carbon atoms, and
in the formula (6), R⁶¹ represents a trivalent hydrocarbon group having 1 to 12 carbon atoms.

7. The electrophotographic member according to any one of claims 1 to 6, wherein
A2/A1 is 0.90 to 1.20, where A1 represents a hexadecane contact angle of the outer surface of the surface layer, and A2 represents a hexadecane contact angle of the outer surface after wiping the outer surface of the surface layer with Bemcot paper impregnated with hexane while applying a force of 5 N 50 times.

8. The electrophotographic member according to any one of claims 1 to 7, wherein
a thickness of the surface layer is 3 to 15 µm.

9. An electrophotographic image forming apparatus comprising the electrophotographic member according to any one of claims 1 to 8.

10. The electrophotographic image forming apparatus according to claim 9, comprising the electrophotographic member as an intermediate transfer member.
